# EUROPÄISCHE PATENTSCHRIFT

(11) **EP 0 610 465 B1**
(45) Veröffentlichungstag und Bekanntmachung des Hinweises auf die Patenterteilung: **21.05.1997**
(21) Anmeldenummer: 93915803.6
(22) Anmeldetag: 06.07.1993
(51) Int. Cl.: F16B 13/12

(54) **BEFESTIGUNGSELEMENT**
SECURING DEVICE
ELEMENT DE FIXATION

(30) Priorität: 24.07.1992 DE 4224572
(43) Veröffentlichungstag der Anmeldung: 17.08.1994
(73) Patentinhaber: SFS Industrie Holding AG, 9435 Heerbrugg (CH)
(72) Erfinder: GÖLDI, Michael, CH-9450 Altstätten (CH); PATSCH, Werner, FL-9490 Vaduz (LI)
(74) Vertreter: Ludescher, Hans
(86) Internationale Anmeldenummer: EP9301738
(87) Internationale Veröffentlichungsnummer: WO9402747

(56) Entgegenhaltungen:
- WO-A-81/02915
- DE-A- 1 750 485
- DE-A- 2 452 478
- FR-A- 17 255
- FR-A- 440 890
- FR-A- 1 122 536
- FR-A- 2 420 050
- US-A- 1 248 005
- US-A- 2 543 683
- Industrial fasteners handbook, 3 ed., S. 164

## Beschreibung

Die Erfindung betrifft ein Befestigungselement der im Oberbegriff des Anspruchs 1 angegebenen Art. Ein solches Befestigungselement ist aus der US 1 248 005 oder der US 2 543 584 bekannt, auf die weiter unten noch näher eingegangen wird.

Befestigungselemente aus Metalldübeln und Schrauben sind an sich bekannt. Es gibt die sogenannten Innengewindedübel aus Messing, welche an ihrem einen Ende zur Bildung eines Spreizbereiches mit Längsschlitzen versehen sind, wobei eine mittige Durchgangsöffnung mit einem Innengewinde gegen das freie Ende des Dübels hin konisch verjüngt ausgebildet ist. Dadurch wird bewirkt, daß dann, wenn das freie Ende der Schraube in den Bereich des konisch verjüngten Abschnittes des Metalldübels gelangt, dieser längsgeschlitzte Bereich aufgespreizt oder stärker an die Bohrungswandung angepreßt wird. Bei einer solchen Konstruktion müssen gerade dann, wenn der Untergrund, in welchen der Dübel eingesetzt ist, aus besonders hartem Material besteht, die Dübel- und die Schraubenlänge exakt aufeinander abgestimmt sein. Wenn hingegen das Material, in welches der Dübel eingesetzt ist, relativ weich ist, dann ergibt sich erst bei den letzten paar Umdrehungen der Schraube ein Aufspreizen des Dübels, so daß die Haltekraft beeinträchtigt ist.

Das gleiche gilt für Innengewindedübel aus Metall, in welche ein Spreizkonus eingesetzt ist. Auch hier ist ein exaktes gegenseitiges Abstimmen der Länge des Dübels und der Länge der Schraube erforderlich, wobei außerdem eine ordnungsgemäße Spreizkraft nur dann gewährleistet ist, wenn der umgebende Bereich der Bohrung für die Aufnahme des Metalldübels aus entsprechend hartem Material besteht.

Wenn der Dübel jedoch in entsprechend weniger festes Material eingesetzt werden soll oder wenn z.B. die Dübellänge größer ist als die Länge der ordnungsgemäßen Bohrung, dann ergeben sich Probleme. Dies ist beispielsweise dann der Fall, wenn eine Befestigung in relativ dünnen Betonplatten erfolgen soll. Es kommt dann vor, daß beim Herstellen der Bohrung an der der Einbohrstelle gegenüberliegenden Seite ein größerer Bereich ausbricht, so daß sich die eigentliche Bohrung nur über einen kurzen Bereich erstreckt und sich dann plötzlich stark erweitert.

Diese Probleme lassen sich auch nicht durch das Befestigungselement nach den eingangs erwähnten US 1 248 005 oder US 2 543 683 beseitigen, bei dem die Spreizkraft dadurch ausgeübt wird, daß eine sich ihr Gewinde selbst schneidende Holzschraube in einen sich konisch verjüngenden Abschnitt eines Dübels eingedreht wird. Wegen der Verwendung einer Holzschraube und wegen der konischen Verjüngung muß der Metalldübel aus weichem Material wie Blei gefertigt sein, ist also mit dem Nachteil geringerer Auszugskräfte gegenüber harten Materialien behaftet. Weiter kann das bekannte Befestigungselement in den Fällen, bei denen die ordnungsgemäße Bohrung im Bereich der konischen Verjüngung endet, seine Spreizkraft nicht voll entfalten.

Ein weiteres Befestigungselement mit Dübel aus weichem Material ist aus der FR 17255, Zusatz zu FR 440890, bekannt. Bei diesem bekannten Befestigungselement wird eine Holzschraube in einen kurzen mit Gewinde versehenen Abschnitt eines Dübels aus weichem Material eingedreht. Durch Eindringen der Schraube in einen Bereich kleineren Durchmessers wird der Dübel gespreizt, wobei sich die Schraube an dem vorgefertigten Gewinde abstützt. Da das Material des Dübels beim Eindrehen der Holzschraube ausweichen muß, muß der Dübel auch hier aus weichem Material wie Blei bestehen. Irgendeinen Hinweis auf die Verwendung von härteren Materialien enthält die Druckschrift nicht.

Aus der DE-OS 24 52 478 ist ein Befestigungselement bekannt, das aus einer Hülse aus Messing besteht. Die Hülse ist auf ihrer gesamten Länge mit einem Längsschlitz versehen. Die Befestigung erfolgt hier dadurch, daß die Hülse durch Eindrehen einer Maschinenschraube mit einer so starken Kraft zusammengedrückt wird, daß die erzeugte Spannung die Fließgrenze des Materials der Hülse übersteigt, so daß dieses Material plastisch verformt wird. Um eine plastische Verformung von Messing mit der Maschinenschraube zu erzielen, darf die Messinghülse eine geringe Wandstärke nicht überschreiten. Die Befestigung funktioniert auch nur in besonders hartem Wandmaterial, das genügend Gegenkraft erzeugen kann, und nur dann, wenn die ordnungsgemäße Bohrung ausreichend lang ist und einen exakt definierten geringen Durchmesser hat. Das Befestigungselement nach der DE-OS 24 52 478 kann also nicht zur Befestigung dort eingesetzt werden, wo die ordnungsgemäße Bohrung kurz ist oder kurz sein kann.

Die Erfindung hat sich daher zur Aufgabe gestellt, ein Befestigungselement der im Oberbegriff des Patentanspruchs 1 angegebenen Art so auszubilden, daß es unabhängig von der Länge einer ordnungsgemäßen Bohrung optimal einsetzbar ist.

Diese Aufgabe ist erfindungsgemäß durch die im Patentanspruch 1 angegebenen Merkmale gelöst.

Durch die vorliegende Erfindung werden also ein Metalldübel ohne ein vorbereitetes Innengewinde und eine gewindeformende Schraube eingesetzt, so daß die entsprechende radiale Ausweitung bei der Herstellung des Gewindes allein schon durch das Eindrehen der Schraube gegeben ist. Das Aufspreizen des freien Endes des Metalldübels erfolgt an jener Stelle, wo die Bohrung für die Aufnahme des Metalldübels größer wird, also nicht an einer immer vorbestimmt gleichen Stelle. Sobald sich nämlich die Bohrung erweitert, was eben dann der Fall ist, wenn bei der Herstellung der Bohrung an der gegenüberliegenden Seite ein größerer Bereich ausbricht, dann kann sich der Spreizbereich des Metalldübels nach außen bewegen, weil von außen her kein Gegendruck vorhanden ist. Wenn also die Schraube in einem solchen Bereich weitergedreht wird, dann wird lediglich der geschlitzte Spreizbereich des Metalldübels nach außen gedrückt, da eben in diesem Bereich kein Gewinde mehr gefurcht wird.

Es ist dadurch bei entsprechender Länge des geschlitzten Spreizbereichs gewährleistet, daß die notwendige Spreizwirkung und somit Klemmkraft praktisch immer direkt am Übergang von einer ordnungsgemäßen Bohrung für die Aufnahme des Metalldübels zu einem erweiterten Bohrungsbereich erzielt wird. Dadurch ist auch eine Rückdrehsicherheit infolge der Dauerspannung der sektorförmigen Abschnitte auf die Schraube gewährleistet. Damit auf einem relativ großen Bereich bezogen auf die Länge des Metalldübels die entsprechende Anpreßkraft unabhängig von der Länge einer exakten Bohrung erreichbar ist, wird gemäß der Erfindung z.B. vorgesehen, daß der geschlitzte Bereich am Metalldübel wesentlich länger ausgeführt ist als der ungeschlitzte Bereich. Es ist also ohne Probleme eine ordnungsgemäße Befestigung möglich, und zwar auch dann, wenn nur über die Länge beispielsweise eines Drittels des Metalldübels eine ordnungsgemäße Bohrung zur Verfügung steht.

Von besonderem Vorteil ist es, daß Metalldübel und Schraube durch gewindeformendes Eindrehen der Schraube vormontiert sind. Es muß also für die Herstellung der Befestigung lediglich der Metalldübel, welcher bereits mit der Schraube bestückt ist, in die Bohrung eingesetzt werden, so daß der Festsitz dann gleich durch Verdrehen der Schraube erzielt werden kann.

Weiter wird vorgeschlagen, daß die Durchgangsöffnung am Metalldübel an ihrem der einzudrehenden Schraube zugewandten Ende einen erweiterten Abschnitt mit größerem, wenigstens der Gewindeaußenabmessung entsprechenden Durchmesser aufweist. Es ist dann in einfacher Weise möglich, beim Einsetzen der Schraube eine Führung zu schaffen, damit die Schraube für die Vormontage von Metalldübel und Schraube mit einigen Umdrehungen im Metalldübel ein Anfangsgewinde furchen kann.

Für eine umfangsgeschlossen gleichmäßige Anpressung ist es zweckmäßig, wenn der Metalldübel zwei sich kreuzende, radial durchgehende Schlitze aufweist. Es ergeben sich dadurch praktisch vier Sektoren des Dübels, die sich beim weiteren Eindrehen der Schraube in radialer Richtung nach außen bewegen und somit eine entsprechend hohe Auszugskraft gewährleisten.

Um den Metalldübel vor der eigentlichen Befestigung und Spreizung in der Bohrung so weit festzulegen, daß sich dieser beim Eindrehen der Schraube nicht verdreht, wird erfindungsgemäß vorgeschlagen, daß der Metalldübel an seinem der einzudrehenden Schraube zugewandten Ende eine konische Erweiterung, Riefen, Rippen oder eine Rändelung aufweist. Beim Einschlagen des Metalldübels in die Bohrung ist also ein entsprechender Festsitz gegen Verdrehen hergestellt.

Damit auch gleich eine entsprechende Sicherheit gegeben ist, daß der Metalldübel in der ordnungsgemäßen Lage gesetzt wird, wird vorgeschlagen, daß dieser an seinem der einzudrehenden Schraube zugewandten Ende einen im Durchmesser größeren Anschlagflansch aufweist. Es ist dadurch ein immer gleichbleibend tiefes Setzen des Metalldübels möglich, auch wenn der Untergrund, welcher den Metalldübel aufnehmen soll, durch auf diesen aufgesetzte beispielsweise Isoliermatten nicht einsehbar ist. Dies gilt auch dann, wenn vorhandene alte Schichten auf dem Unterbau aufliegen und dieser daher nicht einsehbar ist.

Besonders vorteilhafte Wirkung mit dem erfindungsgemäßen Befestigungselement wird dann erreicht, wenn die Schraube über deren ganze Schaftlänge mit einem selbstformenden Gewinde versehen ist. Gerade mit entsprechender Anpassung zwischen Metalldübel und Schraube wird eine optimale Wirkung erzielt. Eine besonders zweckmäßige Ausgestaltung liegt dabei darin, daß die Schraube eine trilobulare Querschnittsform aufweist. Es kann dadurch also auch eine besonders wirkungsvolle, das Gewinde in der Durchgangsöffnung selbstformende Schraube eingesetzt werden.

Eine vorteilhafte Ausgestaltung liegt ferner darin, daß die Länge des erweiterten Abschnittes der Durchgangsöffnung mit größerem Durchmesser gleich oder kleiner ist als die Länge der am Außenbereich des Metalldübels vorgesehenen konischen Erweiterung, Riefen, Rippen oder Rändelung. Es ist dadurch die Möglichkeit geschaffen, daß sich der konisch erweiterte Außenbereich bzw. der Bereich mit den Riefen, Rippen oder der Rändelung beim Einschlagen des Metalldübels in eine ordnungsgemäße Bohrung mit entsprechend harter Wandung nach innen hin verformen kann, so daß also unter Umständen der Bereich zwischen den einzelnen freiliegenden Gewindegängen teilweise gefüllt wird.

Ausführungsbeispiele der Erfindung werden in der nachstehenden Beschreibung anhand der Zeichnungen näher erläutert. Es zeigen:
- Fig. 1: ein aus einem Metalldübel und einer Schraube gebildetes Befestigungselement;
- Fig. 2: eine Schraube in Seitenansicht und
- Fig. 3: einen Querschnitt durch den Gewindebereich dieser Schraube;
- Fig. 4: einen Längsschnitt durch den Metalldübel und
- Fig. 5: eine Ansicht des Metalldübels von unten;
- Fig. 6: die Darstellung von zwei unterschiedlichen Bohrungen zur Aufnahme des Befestigungselementes;
- Fig. 7: Ausführungsbeispiele von in diese Bohrungen eingesetzten Befestigungselementen.

Das Befestigungselement besteht aus einem Metalldübel 1 und einer Schraube 2. Daß das Befestigungselement aus noch weiteren Teilen bestehen kann, versteht sich von selbst, da z.B. auch entsprechende Unterlegscheiben, großflächige Unterlegscheiben oder sonstige Teile miteingesetzt werden können, ohne daß diese auf die wesentlichen Merkmale des hier beschriebenen Befestigungselementes einen Einfluß haben.

Der Metalldübel 1 ist an seinem einen Ende zur Bildung eines Spreizbereiches S mit Längsschlitzen 3 versehen und weist eine gewindelose Durchgangsöffnung 4 auf, wobei diese gewindelose Durchgangsöffnung 4 vorteilhaft bereits bei der Fertigung in dieser Form vorgegeben ist. Es wäre zwar denkbar, ein bis zwei Gewindegänge vorzufertigen, um das Eindrehen der Schraube 2 zu erleichtern, doch wird gerade dadurch ein zusätzlicher Arbeitsgang hervorgerufen, welcher gemäß der vorliegenden Erfindung nicht notwendig ist.

Die Schraube 2 weist nämlich einen gewindeformenden Schaftabschnitt 5 auf. Es kann somit die Schraube 2 das Anfangsgewinde und auch das weiterhin beim Eindrehen der Schraube 2 in den Metalldübel 1 notwendige Gewinde herstellen.

Die Durchgangsöffnung 4 am Metalldübel 1 weist an dem der einzudrehenden Schraube 2 zugewandten Ende einen erweiterten Abschnitt 6 mit größerem Durchmesser auf, wobei der Durchmesser wenigstens der Gewindeaußenabmessung der Schraube 2 entspricht. Es ist dadurch möglich, beim Zusammenfügen von Schraube 2 und Metalldübel 1 eine Führung für die Schraubenspitze zu schaffen, um das Eindrehen des Schaftabschnittes 5 in die gewindelose Durchgangsöffnung 4 zu erleichtern. Gerade auch dadurch ist eine Vormontage von Metalldübe 1 und Schraube 2 in einfacher Weise möglich, so daß diese zusammen auf die Baustelle angeliefert werden können. Durch die enge Gewindepassung beim selbstformenden Herstellen des Gewindes ist auch eine gegenseitige unverlierbare Halterung zwischen Metalldübel 1 und Schraube 2 möglich. Bei spezieller Ausbildung wäre es auch denkbar, den Durchmesser des erweiterten Abschnittes 6 dem Flankendurchmesser der Schraube 2 anzupassen, insbesondere dann, wenn die Vormontage automatisch erfolgt.

Beim gezeigten Beispiel hat der Metalldübell 1 zwei sich kreuzende, radial durchgehende Schlitze 3, so daß sich vier sektorförmige Abschnitte 7 ergeben, die beim Spreizen des Metalldübels nach außen dringen können.

Der geschlitzte Bereich, also der Spreizbereich S, ist am Metalldübel 1 wesentlich länger ausgeführt als der ungeschlitzte Bereich U. Es wird dadurch bezogen auf die Eindringtiefe der Schraube 2 im Metalldübel 1 bereits in einem sehr frühen Stadium die Möglichkeit des radialen Ausweichens der entsprechenden Abschnitte ermöglicht.

Der Metalldübel 1 weist an seinem der einzudrehenden Schraube 2 zugewandten Ende eine konische Erweiterung 8 auf, welche beim Einsetzen des Dübels 1 in die vorbereitete Bohrung bewirken soll, daß sich der Metalldübel 1 beim Eindrehen der Schraube 2 nicht mitdreht. Es soll also ein entsprechender Kraftschluß zwischen diesem Abschnitt des Metalldübels 1 und der umgebenden Wandung des Bohrloches erzielt werden.

Zur Bewerkstelligung dieser Verdrehsicherheit wäre es auch denkbar, anstelle einer konischen Erweiterung im entsprechenden Bereich des Metalldübels Riefen, Rippen oder eine Rändelung vorzusehen.

Es wäre auch denkbar, am Metalldübel 1 an seinem der einzudrehenden Schraube 2 zugewandten Ende einen im Durchmesser größeren Anschlagflansch vorzusehen, um dadurch beim Einschlagen des Metalldübels 1 stets eine gleichbleibende Eindringtiefe zu gewährleisten.

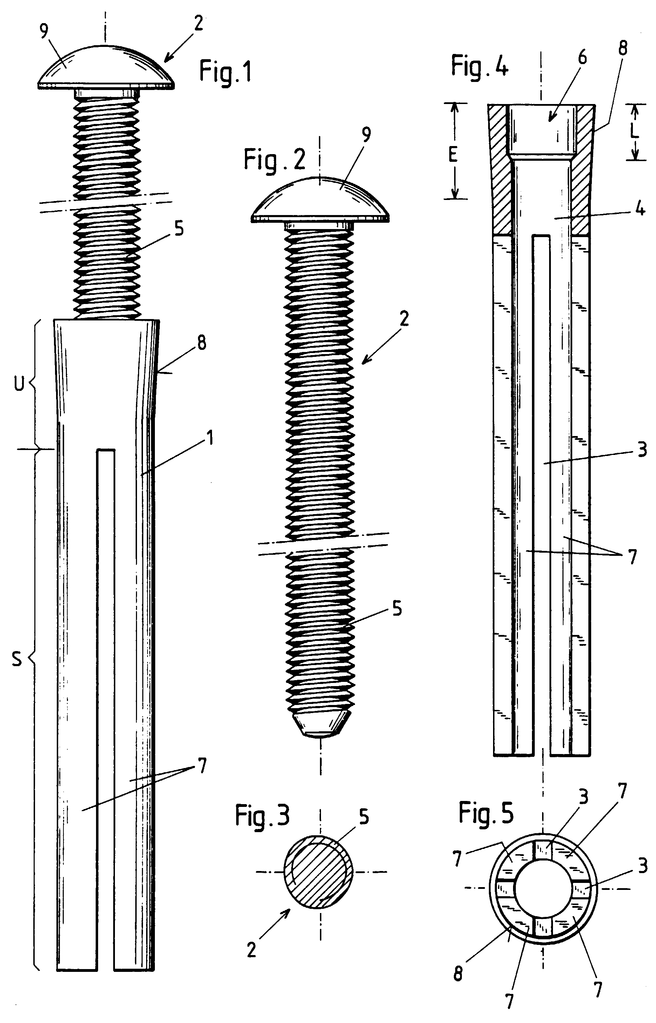

Zumindest der dem freien Ende der Schraube 2 zugewandte Schaftabschnitt 5 ist mit einem selbstformenden Gewinde versehen. In einem solchen Falle ist der darauffolgende Gewindeabschnitt bis zum Kopf 9 der Schraube mit einem zylindrischen Gewindeabschnitt ausgeführt. Es ist aber auch durchaus denkbar, daß die Schraube 2 über deren ganze Schaftlänge mit einem selbstformenden Gewinde versehen ist. Eine vorteilhafte Ausführungsvariante ist dabei die Ausbildung des Schaftabschnittes 5 in einer trilobularen Querschnittsform, wie dies auch inetwa der Fig. 3 der Zeichnungen entnommen werden kann.

Die Länge L des erweiterten Abschnittes 6 der Durchgangsöffnung 4 ist gleich oder kleiner als die Länge E der am Außenbereich des Metalldübels 1 vorgesehenen konischen Erweiterung 8 bzw. der entsprechenden Riefen, Rippen oder Rändelung. Es wäre natürlich auch denkbar, die Länge E kürzer auszuführen als die Länge L, wobei dann jedoch die Gefahr besteht, daß sich der Metalldübel 1 beim Verdrehen der Schraube 2 mitdreht. Da gerade bei der Aufnahme des Metalldübels 1 in diesem Bereich der konischen Erweiterung 8 bei entsprechend harten Materialien der Bohrungswandung ein Verformen des Metalldübels 1 stattfindet, besteht die Möglichkeit, daß sich der erweiterte Abschnitt 6 der Durchgangsöffnung 4 ebenfalls verformt, also im Durchmesser verkleinert wird, wobei sich dann lediglich der an sich freie Gewindebereich der eingesetzten Schraube 2 füllen kann. Es ist also die Möglichkeit geschaffen, daß das Material entsprechend ausweichen kann.

Der Metalldübel 1 ist vorteilhaft aus Aluminium gefertigt, so daß eine doch relativ leichtere Verformbarkeit des Materials beim Eindrehen der das Gewinde selbstformenden Schraube 2 ermöglicht wird. Es ist aber gerade auch bei Einsatz von Aluminium gewährleistet, daß sich die ausspreizenden Bereiche satt an der Bohrungswandung bzw. an unmittelbar daran anschließenden erweiterten Bereichen der Bohrung anlegen können. Selbstverständlich waren - in Anpassung an die jeweiligen Einsatzbereiche - auch andere Metalle für die Herstellung des Metalldübels 1 einsetzbar. So wäre es beispielsweise auch denkbar, die Metalldübel 1 aus Messing herzustellen oder aber auch aus Stahl, wobei je nach besonderem Einsatzzweck auch rostfreier Stahl oder ein entsprechend anderes rostfreies Metall in Frage kommen könnte.

Der Kopf 9 der Schraube 2 ist beim gezeigten Beispiel als Halbrundkopf dargestellt. Es können hier natürlich verschiedene Ausführungsvarianten einer Schraube 2 eingesetzt werden. Insbesondere ist es auch möglich, daß zwischen dem Kopf 9 der Schraube und dem mit einem Gewinde versehenen Schaftabschnitt 5 ein gewindefreier Schaftabschnitt vorgesehen wird, dessen Länge sich beispielsweise nach der Dicke der zu befestigenden Teile richten kann. Wenn beispielsweise relativ dicke Isoliermaterialien und zusätzliche Dachbahnen oder Platten an einem Untergrund befestigt werden sollen, dann wird im relativ dicken Isolierbereich kein Gewinde benötigt. Bei der Ausbildung des Schraubenkopfes wäre es auch möglich, verschiedene andere Varianten vorzusehen. Wenn beispielsweise ein Befestigungselement von unten in eine Decke eingesetzt wird, kann der Kopf verschiedene Ausbildungen haben, um Konstruktionsteile aufzuhängen oder für sonstige Einsatzzwecke.

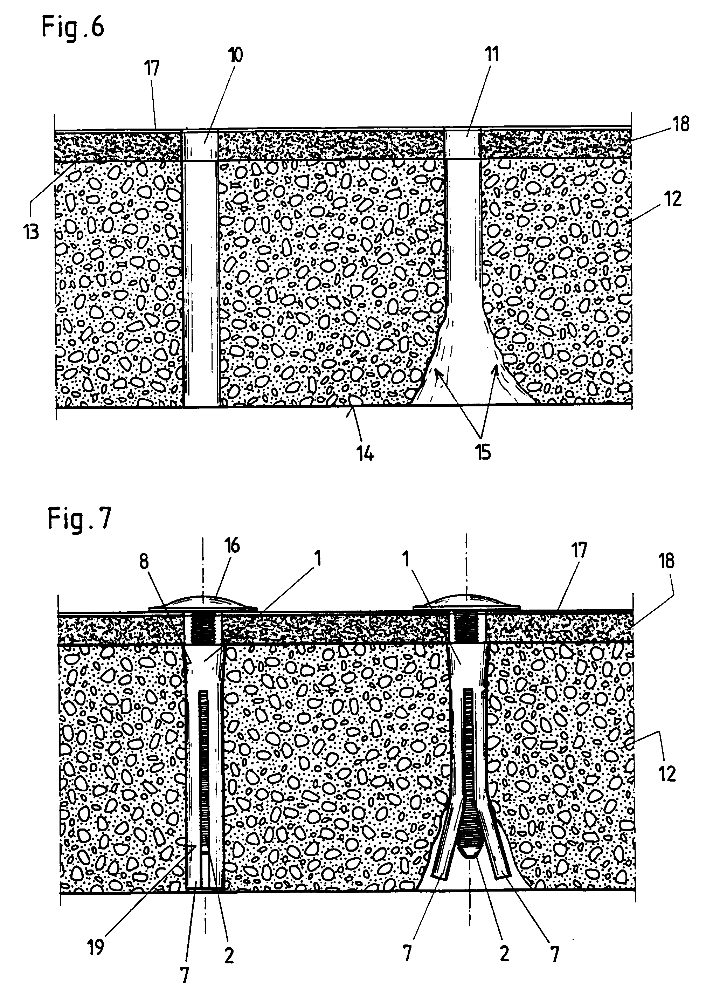

In Fig. 6 ist eine Betonplatte dargestellt, in welche zwei Bohrungen 10 und 11 hergestellt worden sind. Die Bohrung 10 weist durchgehend einen gleichen Durchmesser auf, d.h., daß die Bohrung nach dem Einbohren von oben her bis zum Ende durchgeführt werden konnte, ohne daß Teilbereiche der Betonplatte 12 ausgebrochen wären. Bei der Herstellung der Bohrung 11 hingegen sind seitlich der Bohrung an der der Einbohrseite 13 gegenüberliegenden Begrenzung 14 Teilabschnitte 15 weggebrochen, ohne daß die Bohrung vollendet werden konnte. Hier beginnt der weggebrochene Bereich etwa nach zwei Dritteln der Gesamtlänge einer möglichen Bohrung 10. Es hat sich bei Versuchen gerade bei relativ dünnen Betonplatten (Dicke beispielsweise 3 - 4 cm) herausgestellt, daß sich bei fast jeder herzustellenden Bohrung an der Einbohrseite gegenüberliegenden Begrenzung 14 mehr oder weniger große, weggebrochene Teilabschnitte 15 ergeben.

Hier eignet sich nun das erfindungsgemäße Befestigungselement in ganz besonderer Weise. Vorerst wird der Metalldübel 1 in die Bohrung eingesetzt oder eingetrieben, wobei dies auch durch entsprechende Schläge auf den Schraubenkopf erfolgen kann. Im letzten Bereich des Einsetzens des Metalldübels 1 kommt dann die konische Erweiterung 8 zur Wirkung und preßt sich an die Innenwandung der Bohrung 10 bzw. 11. Somit wird verhindert, daß sich der Metalldübel 1 beim weiteren Setzen des Befestigungselementes mitdrehen kann. Dann wird die Schraube 2 angezogen, so daß sich eine hier eingesetzte großflächige Unterlegscheibe 16 an der Oberseite einer Dachbahn 17 anpressen kann. Somit wird also eine Befestigung der Dachbahn 17 und einer darunterliegenden Isolation 18 auf dem Beton 12 hergestellt.

Wenn nun ein solches Befestigungselement in eine Bohrung 10 eingesetzt wird, dann erfolgt beim Eindrehen der Schraube 2 ein Anpressen der sektorförmigen Abschnitte 7 an der Bohrungswand 19, indem nämlich vom Schaftabschnitt 5 im Bereich der Durchgangsöffnung 4 ein Gewinde geformt wird. Es wird dadurch der geschlitzte Bereich des Metalldübels 1 nach außen gedrängt, so daß eine satte und feste Anlage an der Bohrungswandung 19 erfolgt.

Wenn nun aber weggebrochene Teilabschnitte 15 vorhanden sind, dann werden sich beim weiteren Eindrehen der Schraube 2 der geschlitzte Bereich und somit die sektorförmigen Abschnitte 7 sofort nach außen bewegen und ein weiteres Formen eines Gewindes wird verhindert. Die Abschnitte 7 legen sich somit unmittelbar nach der Erweiterung der Bohrung 11 an die neu gegebene Wandung an und bewirken so eine Ausreißfestigkeit für das Befestigungselement, obwohl nicht die gesamte Dübellänge ausgenutzt werden konnte. Bei Versuchen hat sich gezeigt, daß bereits dann ausreichende Ausreißwerte erzielt werden können, wenn nur ein geringer Teilabschnitt der Länge des Metalldübels 1 in einer ordnungsgemäßen Bohrung sitzt. Gerade durch die besondere Länge des Spreizbereiches 5 können somit vielfältige Einsatzmöglichkeiten abgedeckt werden. Durch die ständig erhalten bleibende Spannung der sektorförmigen Abschnitte 7, welche gegen das Gewinde der Schraube 2 gerichtet ist, wird eine besondere Rückdrehsicherheit für die Schraube 2 erreicht.

Durch eine relativ einfache konstruktive Maßnahme (Metalldübel mit Spreizbereich und gewindeloser Durchgangsöffnung sowie Schraube mit selbstformendem Gewinde wird eine optimale Einsatzmöglichkeit für ein Befestigungselement geschaffen, und hier gerade für eine Befestigung mit im voraus kaum definierbaren Bohrungslängen und dabei insbesondere wieder bei Befestigungseinsätzen auf aus Beton gefertigten Dachelementen.

In der vorstehenden Beschreibung wurde stets von einem Einsatz des Befestigungselementes in Beton gesprochen. Es ist natürlich auch ein Einsatz in mit Hohlräumen versehenen Betonplatten bzw. Betondeckenplatten oder in Betonmauersteinen mit Hohlräumen oder Isolationseinschlüssen möglich denkbar.

## Patentansprüche

1. Befestigungselement zum Einsatz in Beton oder dergleichen Material, bestehend aus einem Metalldübel(1), der an einem freien Ende zur Bildung eines Spreizbereichs(S) und von sektorförmigen Abschnitten(7) mit mehreren Längsschlitzen(3) versehen ist und am Einschraubende einen ungeschlitzten Bereich (U) hat, welcher eine gewindelose Durchgangsöffnung (4) aufweist, sowie einer in den Metalldübel (1) eindrehbaren Schraube, **dadurch gekennzeichnet,** daß der Metalldübel (1) aus Stahl, Messing, Aluminium oder ähnlich hartem Metall besteht und eine sich über dessen ganze Länge erstreckende, gewindelose Durchgangsöffnung (4) aufweist, und daß zum Erzeugen der zum Aufspreizen des freien Endes erforderlichen Kraft die Schraube (2) zumindest an ihrem Einschraubende mit einem gewindeformenden Schaftabschnitt (5) versehen ist und im wesentlichen auf ihrer gesamten Schaftlänge zylindrisch ist oder eine gleichbleibende trilobulare Querschnittsform hat.

2. Befestigungselement nach Anspruch 1, dadurch gekennzeichnet, daß Metalldübel (1) und Schraube (2) durch gewindeformendes Eindrehen der Schraube (2) vormontiert sind.

3. Befestigungselement nach Anspruch 1 oder 2, dadurch gekennzeichnet, daß die Durchgangsöffnung (4) im Metalldübel (1) an ihrem der einzudrehenden Schraube (2) zugewandten Ende einen erweiterten Abschnitt (6) mit größerem, wenigstens der Gewindeaußenabmessung entsprechendem Durchmesser aufweist.

4. Befestigungselement nach einem der Ansprüche 1 1 bis 3, dadurch gekennzeichnet, daß der Metalldübel (1) zwei sich kreuzende, radial durchgehende Schlitze (3) aufweist.

5. Befestigungselement nach einem der Ansprüche 1 bis 4, dadurch gekennzeichnet, daß der ungeschlitzte Bereich des Metalldübels (1) außen mit einer Verdrehsicherung versehen ist.

6. Befestigungselement nach Anspruch 5, dadurch gekennzeichnet, daß die Verdrehsicherung des Metalldübels (1) aus einer konischen Erweiterung (8) desselben oder aus Riefen, Rippen oder einer Rändelung besteht.

7. Befestigungselement nach einem der Ansprüche 1 bis 6, dadurch gekennzeichnet, daß der Metalldübel (1) an seinem der einzudrehenden Schraube (2) zugewandten Ende einen im Durchmesser größeren Anschlagflansch aufweist.

8. Befestigungselement nach den Ansprüchen 3 und 6, dadurch gekennzeichnet, daß die Länge (L) des erweiterten Abschnittes (6) der Durchgangsöffnung (4) gleich der oder kleiner als die Länge (E) der außen an dem Metalldübel (1) vorgesehenen Verdrehsicherung ist.

## Claims

1. A fastening element for use in concrete or similar material, comprising a metal dowel (1) which at one free end is provided with a plurality of longitudinal slots (3) to form an expanding region (S) and comprising sector-like portions (7), and at the screwing-in end has an unslotted region (U) which has a threadless bore (4), and also a screw which can be screwed into the metal dowel (1), characterised in that the metal dowel (1) consists of steel, aluminium or similar hard metal and has a threadless bore (4) extending over its entire length, and in that to generate the force required to expand the free end the screw (2) is provided at its screwing-in end with a thread-forming shank portion (5) and is cylindrical substantially along its entire shank length or is of constant trilobular cross-sectional shape.

2. A fastening element according to Claim 1, characterised in that the metal dowel (1) and the screw (2) are preassembled by screwing in the screw (2) so as to form a thread.

3. A fastening element according to Claim 1 or 2, characterised in that the bore (4) in the metal dowel (1) has, at its end nearest the screw (2) to be screwed in, a widened portion (6) of larger diameter corresponding at least to the thread outer diameter.

4. A fastening element according to any one of Claims 1 to 3, characterised in that the metal dowel (1) has two intersecting, radially continuous slots (3).

5. A fastening element according to any one of Claims 1 to 4, characterised in that the unslotted region of the metal dowel (1) is provided externally with means for preventing relative rotation.

6. A fastening element according to Claim 5, characterised in that the means for preventing relative rotation of the metal dowel (1) comprises a conical widening (8) thereof or grooves, ribs or knurling.

7. A fastening element according to any one of Claims 1 to 6, characterised in that at its end nearest the screw (2) to be screwed in the metal dowel (1) has a stop flange of larger diameter.

8. A fastening element according to Claims 3 and 6, characterised in that the length (L) of the widened portion (6) of the bore (4) is the same or smaller than the length (E) of the means for preventing relative rotation provided externally on the metal dowel (1).

## Revendications

1. Elément de fixation pour insertion dans du béton ou un matériau semblable, se composant d'une cheville métallique (1), qui est munie à une extrémité libre de plusieurs rainures longitudinales (3) pour la formation d'une zone d'écartement S et de segments (7) en forme de secteurs et qui a, à l'extrémité insérée, une zone non rainurée U, qui comporte une ouverture de passage (4) sans filetage et elle se compose aussi d'une vis pouvant être introduite en rotation dans la cheville métallique (1),
caractérisé en ce que
la cheville métallique (1) est composée d'acier, de laiton, d'aluminium ou de matière analogue d'un métal dur et comporte une ouverture de passage (4) sans filetage s'étendant sur toute la longueur, et en ce que pour produire la force nécessaire à élargir l'extrémité libre, la vis (2) est munie au moins à son extrémité insérée d'un tronçon de tige (5) formant filetage et est essentiellement cylindrique sur sa longueur de tige totale ou bien a une forme de section transversale invariable trilobulaire.

2. Elément de fixation selon la revendication 1,
caractérisé en ce que
la cheville métallique (1) et la vis (2) sont prémontées par la mise en rotation formant filetage de la vis (2).

3. Elément de fixation selon les revendications 1 ou 2,
caractérisé en ce que
l'ouverture de passage (4) dans la cheville métallique (1) comporte, à son extrémité tournée vers la vis (2) à introduire en rotation, une partie élargie (6) de diamètre plus grand correspondant au moins à la dimension extérieure du filet.

4. Elément de fixation selon une des revendications 1 à 3,
caractérisé en ce que
la cheville métallique (1) comprend deux rainures traversantes se croisant radialement.

5. Elément de fixation selon une des revendications 1 à 4,
caractérisé en ce que
la zone non rainurée de la cheville métallique (1) est munie extérieurement d'une sécurité antitorsion.

6. Elément de fixation selon la revendication 5,
caractérisé en ce que
la sécurité antitorsion de la cheville métallique (1) se compose d'un élargissement conique (8) de celle-ci ou de stries, de nervures ou d'un moletage.

7. Elément de fixation selon une des revendications 1 à 6,
caractérisé en ce que
la cheville métallique (1) comporte, à son extrémité tournée vers la vis (2) à introduire, une bride d'arrêt plus grande en diamètre.

8. Elément de fixation selon les revendications 3 et 6,
caractérisé en ce que
la longueur (L) de la partie élargie (6) de l'ouverture de passage (4) est égale ou plus petite que la longueur (E) de la sécurité antitorsion prévue extérieurement sur la cheville métallique (1).
